# FASCICULE DE BREVET EUROPEEN

(11) **EP 3 117 151 B1**
(45) Date de publication et mention de la délivrance du brevet: **15.11.2023**
(21) Numéro de dépôt: 15714592.1
(22) Date de dépôt: 09.03.2015
(51) Int. Cl.: F24C 15/10, C03C 10/00, C03C 17/00, F24C 7/08

(54) **PLAN DE TRAVAIL DE GRANDE DIMENSION EN MATÉRIAU VERRIER**
GROSSE ARBEITSPLATTE AUS GLASMATERIAL
LARGE SIZE WORKTOP MADE OF GLASS MATERIAL

(30) Priorité: 10.03.2014 FR 1451947
(43) Date de publication de la demande: 18.01.2017
(73) Titulaire: Eurokera S.N.C., 02400 Château-Thierry (FR)
(72) Inventeur: CHARPENTIER, Bertrand, 02400 Chateau-Thierry (FR); FERNANDEZ, Javier, 75003 Paris (FR); LISMONDE, Michel, 02400 Brasles (FR); RAVEL, Michael, 02850 Barzy sur Marne (FR); ROUX, Nicolas, 02400 Chateau-Thierry (FR); VILATO, Pablo, 75014 Paris (FR)
(74) Mandataire: Saint-Gobain Recherche
(86) Numéro de dépôt international: PCT/FR2015/050581
(87) Numéro de publication internationale: WO 2015/136205

(56) Documents cités:
- WO-A1-2012/001300
- WO-A1-2012/146860
- FR-A1- 2 766 816
- FR-A1- 2 864 071
- JP-A- 2006 314 531
- US-A1- 2013 274 085
- "Whirlpool Interactive Cooktop at CES 2014", Whirlpool USA , 9 janvier 2014 (2014-01-09), XP002734990, Extrait de l'Internet: URL:https://www.youtube.com/watch?v=6frHH5 OtXU4 [extrait le 2014-01-26]

## Description

La présente invention concerne un plan de travail, ou table de travail ou comptoir ou meuble, formé d'au moins une plaque de grandes dimensions positionnée ou destinée à être positionnée horizontalement sur un ou des éléments supports (caisson d'un meuble, pied(s) support(s)) afin d'offrir une surface stable destinée à différents usages. En particulier, la présente invention concerne une table ou un meuble présentant une surface ou plateau apte à permettre en simultané ou successivement différentes activités et/ou support d'objets, en particulier pouvant permettre la cuisson ou le réchauffage d'aliments dans des récipients appropriés et offrir d'autres usages.

Les matériaux habituellement utilisés pour réaliser des plans de travail sont par exemple le bois, le quartz, le Corian^{®}, etc. Pour la cuisson d'aliments, il existe par ailleurs des surfaces de cuisson de grandes dimensions dans les cuisines, en particulier à usage professionnel, ces plaques étant généralement métalliques et/ou composites. En particulier, il existe des panneaux multicouches, à base de couches ou matériaux céramiques tels que le grès, de couches ou matériaux métalliques de type aluminium et de couches ou matériaux plastiques isolants de type Bakélite, ces panneaux présentant généralement une épaisseur importante (de l'ordre de 12 mm par exemple) et étant de réalisation complexe.

Parallèlement, des plans de cuisson en matériaux de type vitrocéramique ou verre renforcé, de dimensions plus limitées (en particulier de surface généralement inférieure à 0.4 m², des plaques de surface supérieure pouvant être plus difficiles à obtenir par les procédés habituellement utilisés, et pouvant poser des problèmes en terme de planéité, manutention, etc), existent, pour des usages en particulier domestiques, l'utilisation de matériau vitrocéramique s'étant généralisé ces dernières années pour les plaques de cuisson, en raison notamment des performances de ce matériau pour cet usage et de l'aspect attractif des plaques réalisées.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants. Les plaques ainsi conçues sont destinées exclusivement à l'usage en tant que plaques de cuisson et ne sont traditionnellement pas destinées à recevoir d'autres objets que les ustensiles résistants à la chaleur utilisés pour la cuisson d'aliments, ni destinées à l'exercice d'autres activités que la cuisson d'aliments.

Les documents WO 2012/146860 A1, WO 2012/001300 A1, FR 2 766 816 A1 et JP 2006 314531 A sont pertinents par rapport à l'objet de l'invention.

La présente invention a cherché à élargir la gamme des produits d'équipement ménagers existants, à usage domestique ou professionnel, en mettant au point un nouveau type de produits interactifs permettant des usages plus variés.

Ce but a été atteint par le nouvel équipement ou article ou installation selon l'invention, avantageusement interactif, cet équipement mobilier/ménager comprenant :
- au moins un plan (ou comptoir ou table) de travail formé d'au moins un substrat (en particulier plaque ou surface ou plateau) en (ou (à base) d'un ou essentiellement constituée d'un) matériau verrier transparent (présentant en particulier une transmission lumineuse supérieure à 60%) monolithique (ou monobloc ou d'un seul tenant), avantageusement essentiellement plan, de surface (longueur par largeur de sa face de plus grandes dimensions) supérieure à 0.7 m², muni d'un revêtement de façon à ce que le substrat muni du revêtement présente un flou supérieur à 15 %, une transmission lumineuse T_{L} inférieure à 60%, et un indicateur d'opacité supérieur à 85,
- au moins un élément de chauffage (en particulier sous le substrat et caché par celui-ci lorsque cet élément de chauffage n'est pas en fonctionnement/est au repos),

- au moins une source lumineuse, en particulier destinée à matérialiser (rendre visible) une ou des zones (telles que les zones de chauffe) ou un ou des éléments ou affichages (par exemple un indicateur d'état de marche ou un indicateur de puissance) du substrat, cette source se trouvant en particulier à l'aplomb du substrat pour un affichage par projection, ou sous le substrat pour un affichage par transmission au travers du substrat,
- au moins une interface de communication avec au moins un élément du plan (par exemple avec la ou les sources lumineuses et/ou le ou les éléments de chauffage), et/ou le cas échéant avec au moins un élément extérieur (hors du plan), par exemple avec un module (une unité, un dispositif) extérieur pour une communication sans fil.

Le produit mis au point selon l'invention répond au but recherché, la présente invention proposant ainsi un équipement nouveau interactif (permettant notamment l'activation de fonctions telles que la cuisson d'aliments, et l'affichage de zones ou données) pouvant tout aussi bien être utilisé en cuisine que dans une autre pièce à vivre, le plan de travail pouvant faire partie d'un meuble plein ou non, d'une table, d'un comptoir, etc, ce plan de travail étant monté ou apte à être monté horizontalement sur (en particulier au sommet de) un ou des éléments supports (caisson d'un meuble, pied(s) support(s)) afin d'offrir une surface stable destinée à différents usages, le plan de travail ou l'équipement selon l'invention présentant une surface supérieure continue apte à permettre en simultané ou successivement des activités (telles que travail, jeux, lecture, etc.), le support d'objets (tels que papiers, ordinateurs, vases, vaisselle, etc.), et la préparation ou la cuisson ou le réchauffage d'aliments dans des récipients appropriés.

Plus généralement, selon un aspect ne faisant pas partie des revendications, il est également décrit un plan de travail formé d'au moins un substrat en matériau verrier transparent monolithique de surface supérieure à 0.7 m², muni d'un revêtement de façon à ce que le substrat muni du revêtement présente un flou supérieur à 15 %, une transmission lumineuse T_{L} inférieure à 60%, et un indicateur d'opacité supérieur à 85, ce plan de travail étant destiné à équiper un meuble ou équipement interactif multi-usages (destiné à plusieurs usages tels que listés au paragraphe précédent), en particulier tel que défini ci-avant selon l'invention.

Il est également décrit, selon un aspect ne faisant pas partie des revendications, l'utilisation d'un substrat, en particulier d'une plaque, en matériau verrier transparent monolithique de surface supérieure à 0.7 m², muni d'un revêtement de façon à ce que le substrat muni du revêtement présente un flou supérieur à 15 %, une transmission lumineuse T_{L} inférieure à 60%, et un indicateur d'opacité supérieure à 85, comme plan de travail interactif multi-usages, en particulier tel que mentionné aux paragraphes ci-dessus.

Comme indiqué précédemment, le plan de travail est formé d'un substrat ou plaque en matériau verrier monolithique (le matériau verrier ayant été formé d'un seul bloc/en une seule pièce, même si le substrat peut le cas échéant présenter des évidements, généralement pratiqués dans la pièce déjà formée, à des fins esthétiques ou fonctionnelles) de grandes dimensions, l'avantage d'une telle plaque monolithique de grandes dimensions étant notamment d'offrir une surface majoritairement continue/uniforme/sans raccords, esthétique et d'entretien facile, ainsi qu'un plus grand confort d'utilisation et une plus grande sécurité (en matière d'étanchéité en cas de renversement de liquide, etc. ), etc. Le substrat consiste essentiellement, voire uniquement, en le matériau verrier, ce substrat/matériau verrier pouvant le cas échant être muni de revêtements de décoration ou fonctionnels de faible épaisseur (notamment de l'ordre de quelques dizaines de nanomètres à quelques centaines de microns, voire plus), par exemple en émail, peinture, couches minces, etc, comme précisé ultérieurement.

Contrairement à l'usage dans les vitrocéramiques notamment, ce (substrat en) matériau verrier est de grandes dimensions, sa surface (correspondant au produit de sa longueur par sa largeur pour sa face de plus grandes dimensions - généralement sa face supérieure, destinée à être apparente et à servir de support d'articles (ménagers ou de travail ou de cuisson) étant de dimensions supérieures à 0.7 m², de préférence supérieures à 0.9 m², notamment supérieures à 1 m², en particulier supérieures ou égales à 2 m². Or la fabrication de grandes plaques, dans le cas de la vitrocéramique notamment, pose de nombreux problèmes en matière de planéité et de manipulation. Une plaque de grandes dimensions, présentant pourtant une bonne planéité, peut néanmoins être avantageusement obtenue en réduisant la vitesse de passage (ou rallongeant l'arche de céramisation ou augmentant le temps de séjour dans l'arche) par rapport à la vitesse (ou à la longueur de l'arche ou au temps standards) habituellement utilisée pour obtenir des plaques vitrocéramiques de dimensions usuelles inférieures à 0.4 m², comme explicité ultérieurement dans le procédé décrit.

Le substrat/matériau verrier selon l'invention est avantageusement plan (ou majoritairement ou quasiment plan), et présente en particulier une planéité (hauteur entre le point le plus haut et le point le plus bas du substrat par rapport au plan moyen du substrat, à l'exception des déformations volontaires éventuelles opérées sur le substrat à des fins esthétiques ou fonctionnelles) inférieure à 3 mm, notamment inférieure à 2 mm, en particulier inférieure à 1 mm, la planéité étant mesurée à l'aide d'un ondulomètre de référence SurFlat commercialisé par la société Visuol. Le substrat est généralement de forme géométrique, en particulier rectangulaire, voire carrée, voire circulaire ou ovale, etc., et présente généralement une face "supérieure" (face visible) en position d'utilisation, une autre face "inférieure" (généralement cachée, dans le châssis ou caisson du meuble incorporant le plan de travail) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés (ces formes ayant été ajoutées lors de la fabrication du substrat, par exemple par laminage ou effondrement ou pressage, etc., ou ayant été ajoutées en reprise), etc, ces variations de forme constituant avantageusement des variations continues de la plaque (sans changement de matériaux ou raccords). La face inférieure peut être notamment lisse ou munie de picots augmentant sa résistance mécanique et obtenus par exemple par laminage.

L'épaisseur du substrat monolithique en matériau verrier utilisé est généralement d'au moins 2 mm, notamment d'au moins 2.5 mm, en particulier est de l'ordre de 3 à 30 mm, et avantageusement est inférieure à 15 mm, en particulier est de l'ordre de 3 à 15 mm, notamment de 3 à 10 mm.

Le matériau verrier du substrat utilisé est avantageusement résistant à haute température et/ou présente un coefficient de dilatation nul ou quasi-nul (par exemple inférieur à 15.10⁻⁷ K⁻¹), en particulier est avantageusement de la vitrocéramique ou un verre renforcé (notamment trempé chimiquement ou thermiquement). De préférence, le substrat est un substrat en vitrocéramique. Comme défini selon l'invention, le matériau verrier est transparent, et présente une transmission lumineuse T_{L} supérieure à 60%, notamment supérieure à 80%, comme défini selon l'invention.

La vitrocéramique utilisée peut être notamment de composition telle que décrite dans les demandes de brevets publiées sous les numéros suivants : WO2013171288, US2010167903, WO2008065166, EP2086895, JP2010510951, EP2086896, WO2008065167, US2010099546, JP2010510952, EP0437228, cette vitrocéramique étant en particulier une vitrocéramique d'aluminosilicate de lithium.

La vitrocéramique peut être affinée à l'arsenic (c'est-à-dire de (verre mère de) composition comprenant de l'ordre de 0.2 % à 1.5% en poids d'oxyde d'arsenic (exprimé en As₂O₃), ou peut être non affinée à l'arsenic (en particulier présentant un taux d'oxydes d'arsenic inférieur à 0.2 %, en particulier inférieur à 0.1%, voire nul)/affinée à l'étain.

Le matériau verrier peut être également un verre trempé non céramisé, par exemple un aluminosilicate de lithium trempé et coloré dans la masse tel que décrit dans les demandes de brevets publiées sous les numéros suivants :FR1060677, WO2012080672, ou encore un verre trempé d'un autre type (sodo-calcique, borosilicate, etc), par exemple tel que décrit dans la demande publiée sous le numéro WO2012146860.

La vitrocéramique ou le verre trempé sont obtenus par les procédés respectifs décrits dans les documents précités en utilisant les cycles et températures de traitement permettant d'obtenir le matériau verrier présentant les caractéristiques sélectionnées données dans la définition de l'invention. Dans le cas des vitrocéramiques, ces procédés sont de préférence modifiés en réduisant la vitesse de passage d'au moins 25%, de préférence d'au moins 50%, ou en augmentant la longueur de l'arche de céramisation ou le temps de séjour dans ladite arche d'au moins 25%, de préférence d'au moins 50%, par rapport respectivement aux vitesses, longueurs et temps normalement utilisés, afin d'obtenir un substrat plan de grandes dimensions comme requis selon l'invention, comme explicité ultérieurement. Le substrat en vitrocéramique transparente comprend généralement des cristaux de structure β-quartz au sein d'une phase vitreuse résiduelle, la valeur absolue de son coefficient de dilatation étant avantageusement inférieure ou égale à 15.10⁻⁷/°C, voire à 5.10⁻⁷/°C, cette vitrocéramique étant par exemple celle des plaques commercialisées sous le nom KeraLite par la société Eurokera.

Le matériau verrier peut le cas échéant comprendre également des colorants donnant des colorations particulières au substrat, par exemple de l'oxyde de vanadium, de l'oxyde de fer, de l'oxyde de cobalt, de l'oxyde de cérium, de l'oxyde de sélénium, de l'oxyde de chrome, voire de l'oxyde de nickel, de l'oxyde de cuivre et/ou de l'oxyde de manganèse, etc..

Comme indiqué dans la définition de l'invention, le substrat/matériau verrier est pourvu d'un revêtement afin que l'ensemble présente les caractéristiques définies dans l'invention, ce revêtement servant notamment de moyen de masquage destiné à masquer au moins une partie des éléments sous-jacents (moyens de chauffage notamment), et le cas échéant permettant de conférer une opacité/faible transmission et/ou un flou propices à l'affichage par transmission lumineuse au travers du substrat ou à l'affichage par projection lumineuse à la surface du substrat formant écran, comme explicité ultérieurement.

Le revêtement se présente avantageusement sous forme d'au moins une couche de peinture ou de couches minces sur au moins une partie ou l'essentiel ou la totalité de la face inférieure du matériau verrier, en particulier une couche de peinture de l'ordre de 5 à 500 µm d'épaisseur, notamment de 5 à 50 µm d'épaisseur. La peinture utilisée présente préférentiellement une tenue thermique supérieure à 350°C (généralement comprise entre 350°C et 500°C), et est par exemple à base de résine(s) silicone(s), en particulier de résine(s) alkyde(s) silicone(s) (c'est-à-dire une ou des résines silicones modifiées par l'incorporation de résine(s) alkyde(s)), voire peut-être à base d'autres résines telles qu'époxy ou polyuréthane, pour des usages à basses températures inférieures à 200°C, cette peinture pouvant comprendre le cas échéant des pigments, de préférence des pigments pour émaux (dans des proportions n'excédant pas 50 % en poids) selon la coloration désirée. Alternativement, ce revêtement peut également se présenter sous forme d'au moins une couche d'émail en face supérieure du matériau verrier. Le substrat ainsi revêtu peut être par exemple du type des plaques commercialisées sous le nom KeraResin par la société Eurokera.

Comme défini selon l'invention, le substrat revêtu formant le plan de travail est sélectionné de façon à présenter un flou supérieur à 15 %, en particulier supérieur à 40%, voire supérieur à 60%, une transmission lumineuse T_{L} inférieure à 60%, en particulier inférieure à 50%, voire inférieure à 30% (cette transmission lumineuse étant notamment non nulle/supérieure à 0) et un indicateur d'opacité supérieur à 85, de préférence supérieur à 90 (et en particulier inférieur à 100). Le substrat présente ces caractéristiques sur l'essentiel (en particulier sur au moins 80%, voire sur 100%) de sa surface, exception faite d'éventuels décors supplémentaires localisés (par exemple en émail) ou composants localisés appliqués à sa surface.

Le flou mesure le niveau de diffusion lumineuse et est défini, dans le cadre de l'invention, comme étant le rapport de la transmission diffuse sur la transmission totale à une longueur d'onde égale à 550 nm, ce flou étant évalué par exemple à l'aide du spectrophotomètre muni d'une sphère intégrante utilisé pour les mesures de transmission lumineuse.

La transmission lumineuse T_{L} est mesurée selon la norme ISO 9050 :2003 en utilisant l'illuminant D65, et est la transmission totale (intégrée dans le domaine du visible), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003.

L'indicateur (ou facteur ou coefficient) d'opacité Ω est déterminé dans la présente invention par la formule Ω = 100 - ΔE* et est évalué en mesurant (colorimétrie en réflexion effectuée à l'aide d'un colorimètre Byk-Gardner Color Guide 45/0) la variation de couleur ΔE*, correspondant à la différence entre la couleur, mesurée en réflexion sur la face supérieure du substrat, pour le substrat posé sur fond noir opaque et celle pour le substrat posé sur fond blanc opaque (ΔE* = ((L_{N}*-L_{B}*)² + (a_{N}*-a_{B}*)² + (b_{N}*-b_{B}*)²)^{½} selon la formule établie en 1976 par la CIE, L_{B}*,a_{B}*,b_{B}* étant les coordonnées colorimétriques de la première mesure sur fond blanc et L_{N}*,a_{N}*,b_{N}* étant celles de la seconde mesure sur fond noir dans le système colorimétrique établi en 1976 par la CIE).

Le substrat revêtu selon l'invention permet le cas échéant un affichage par projection comme explicité ultérieurement, en particulier, en combinaison avec des sources lumineuses placées au-dessus, permet d'afficher des zones lumineuses pour signaler notamment les zones de cuisson lorsqu'elles sont en état de marche, et/ou permet le cas échéant un affichage par transmission lumineuse par des sources placées en dessous, ce substrat masquant dans un même temps les éléments placés en dessous (tels que les éléments de chauffe et câbles).

Comme défini précédemment, l'article selon l'invention comprend également au moins un élément de chauffage (ou élément chauffant), par exemple un ou des foyers radiants ou halogènes ou un ou plusieurs brûleurs à gaz et/ou un ou plusieurs moyens de chauffage par induction, ces moyens de chauffage étant généralement situés sous le plan de travail et cachés par celui-ci au repos. Le plan de travail de l'article selon l'invention peut comporter un ou plusieurs éléments de chauffage, de même qu'un ou plusieurs feux. Par le terme « feu », on entend un emplacement de cuisson. L'article selon l'invention peut comporter plusieurs types d'éléments de chauffage ou feux (feux à gaz, feux radiants, halogènes ou à induction). De préférence, l'article selon l'invention comprend comme élément(s) de chauffage un ou plusieurs moyens de chauffage par induction.

Le ou les moyens de chauffage peuvent être localisés dans une zone définie (par exemple sur une extrémité du substrat) ou plusieurs zones du substrat, ou peuvent être uniformément répartis sous le substrat, occupant par exemple au moins 25% de la surface du substrat, voire peuvent occuper une surface quasi-équivalente à celle du substrat (par exemple plus de 50 %, notamment plus de 75%, voire plus de 85%, voire 100% de la surface principale du substrat), une pluralité d'inducteurs de petites dimensions tapissant par exemple le substrat sous sa face inférieure, pour permettre un chauffage au besoin dans n'importe quelle zone.

Les emplacements de cuisson sur le plan de travail, à l'aplomb du au moins un élément de chauffage, peuvent être signalés (ou non, dans le cas par exemple d'un plan muni de moyens de chauffage couvrant l'ensemble de sa superficie), sur activation et/ou en permanence, notamment au moyen respectivement de la ou les sources lumineuses et/ou au moyen d'une décoration fixe, par exemple en émail. Les dimensions des motifs permettant de signaler les zones de cuisson (de même que celles de motifs pouvant signaler d'autres zones ou fonctions) peuvent être plus ou moins importantes, par exemple il peut s'agir de cercles délimitant chacun des éléments de chauffage, ou de petits motifs (triangles, croix, etc.) en leur centre ou à leur base, etc.

De préférence, les emplacements de cuisson (et/ou le cas échéant d'autres zones et/ou éléments et/ou fonctions et/ou décorations) sont signalés par au moins une source lumineuse telle qu'évoquée dans la définition de l'invention, cette source une fois activée indiquant par exemple l'emplacement à l'aide d'un motif lumineux (notamment de type disque, cercle, croix, triangle, etc.) de couleur et/ou de dimensions fixes ou variables. Alternativement, ils peuvent être indiqués en permanence, par un motif (notamment de type rond cercle, croix, triangle, etc.) fixe, obtenu notamment par dépôt de couche(s) (en particulier telle(s) que celle(s) utilisée(s) pour la décoration de vitrocéramiques), par exemple en émail, à la surface de la plaque (notamment en face supérieure).

Dans un mode de réalisation préféré, et notamment lorsque le substrat revêtu est opaque ou de très faible transmission lumineuse (notamment inférieure à 5%), le ou les emplacements de cuisson (et/ou le cas échéant d'autres zones et/ou éléments et/ou fonctions et/ou décorations) sont signalés par, et/ou mis en évidence à l'aide de ou au moyen de, au moins une source lumineuse telle qu'évoquée dans la définition de l'invention, sur activation de ladite source, ladite source se trouvant au-dessus (en position d'utilisation) du substrat et permettant un affichage lumineux par projection (directe) sur cette surface/face formant écran. Le substrat défini selon l'invention convient particulièrement bien à un tel type d'affichage.

Dans un autre mode de réalisation, pour un substrat revêtu présentant une transmission lumineuse T_{L} d'au moins 5%, le ou les emplacements de cuisson peuvent (également ou alternativement) être signalés par, et/ou mis en évidence à l'aide de ou au moyen de, au moins une source lumineuse telle qu'évoquée dans la définition de l'invention, sur activation de ladite source, ladite source étant placée sous le substrat (en position d'utilisation) et étant cachée par celui-ci au repos, ladite source permettant un affichage lumineux par transmission au travers du plan de travail.

Une ou des sources lumineuses peuvent également permettre l'affichage d'autres éléments ou fonctions, par exemple l'affichage de moyens ou zones de commande (sous forme de touches, logos, voire claviers, etc.) ou d'indicateurs (d'intensités/de puissance, de temps, etc.), activables par exemple par contact sur la surface du plan (à l'aide par exemple de capteurs situés sous la surface) ou à distance (notamment par communication sans fil), voire par simple mouvement de la main (par capteurs ou détecteurs situés le cas échéant à l'extérieur et enregistrant le mouvement, par exemple par triangulation, pour le convertir, à l'aide notamment d'un algorithme et d'une interface adaptés, en l'activation d'une fonction par exemple), ou le cas échéant par la pose d'un objet déterminé (casserole, etc.) à un emplacement déterminé (telle qu'une zone de cuisson) de la plaque. La ou les sources lumineuses peuvent également permettre l'affichage de décors, ou de données diverses (affichage par exemple de pages d'ordinateurs, de recettes de cuisine, etc.) téléchargées par exemple par communication sans fil en utilisant une interface appropriée et projetées ou transmises à partir des sources lumineuses à la surface de la plaque.

Le cas échéant, l'article selon l'invention peut comprendre plusieurs sources lumineuses, pour l'éclairage de plusieurs zones ou pour l'affichage de textes ou décors complexes, ou pour homogénéiser l'éclairage, ces sources pouvant être disposées suivant des axes et des angles d'éclairage différents pour obtenir l'effet voulu, sans reflets ou ombrages indésirables. En particulier dans l'éclairage par projection sur le plan formant écran, plusieurs sources sont par exemple disposées de façon que l'angle entre chaque source (ou entre chaque élément, par exemple miroir, envoyant la lumière vers le plan de travail) et la normale au plan de travail soit compris entre 5 et 60°, de préférence entre 30 et 45° pour minimiser les effets d'ombres projetées par une personne opérant sur le plan de travail.

La ou les sources lumineuses peuvent être avantageusement formées par des diodes électroluminescentes, pour des raisons notamment d'encombrement, d'efficacité, de pérennité et de résistance aux conditions environnantes (chaleur...), et/ou peuvent être d'autres types de sources, par exemple lampes halogènes ou à incandescence, lasers ou écrans à cristaux liquides, les sources pouvant le cas échéant être utilisées en combinaison avec des lentilles ou miroirs, etc.

Les diodes sont avantageusement de type puce(s) semi conductrice(s), en matériaux minéraux (DEL ou LED en anglais), émettant notamment dans une direction, et peuvent être encapsulées, c'est-à-dire comprendre un composant semi-conducteur et une enveloppe (par exemple en résine type époxy ou nylon), encapsulant le composant semi-conducteur. Ces diodes peuvent aussi être des puces semi-conductrices sans lentilles de collimation par exemple de taille de l'ordre de la centaine de µm ou du mm, éventuellement avec une encapsulation minime (par exemple de protection).

Les diodes peuvent le cas échéant être portées par un support ou barrette ou embase, cette embase pouvant présenter une surface (plane ou inclinée) traitée et/ou rendue réfléchissante pour une meilleure efficacité lumineuse, par exemple revêtue d'une laque ou peinture et/ou couche miroir, et/ou couplée à un réflecteur blanc ou métallique pour mieux diriger le rayonnement émis.

Le cas échéant, on peut également utiliser des diodes électroluminescentes organiques (OLED), consistant notamment en une superposition de couches semi-conductrices organiques entre des électrodes, et produisant différentes couleurs au pixel près suivant le cheminement de l'électricité à travers les couches organiques.

L'assemblage de chaque source ou des sources (au substrat ou à un support, par exemple à une partie de l'équipement ou une partie extérieure (associée audit équipement) telle qu'un rail ou un dispositif suspendu au-dessus du plan de travail (ce dispositif pouvant également inclure d'autres composants tels qu'une hotte, la ou les sources pouvant être notamment intégrées dans cette hotte)), peut se faire par soudure, clipsage, collage, etc, le cas échéant par l'intermédiaire d'un autre élément ; par exemple, on peut monter des diodes, soudées sur un support lui-même logé au fond d'un profilé métallique, par clipsage ou collage du profilé. Le positionnement de la ou des sources (par rapport à la plaque notamment) est adapté pour permettre un affichage sur le substrat (par projection (notamment par le dessus) sur la plaque servant d'écran, ou au travers de la vitrocéramique lorsque le substrat n'est pas complètement opaque).

Les sources, ainsi que leur alimentation et actionnement, peuvent être dissocié(e)s ou non de façon à permettre un éclairage simultané ou individuel des zones d'éclairage voulues, selon les besoins. Chaque source peut être monochromatique (couleur pure) ou polychromatique (couleur de synthèse).

Par « source lumineuse monochromatique » on entend une source lumineuse présentant un seul pic d'émission dans la gamme des longueurs d'onde visibles et tel que la largeur du pic varie de 1 à 100 nm, préférentiellement de 5 à 50 nm.

Par « source lumineuse polychromatique » on entend une source lumineuse qui présente au moins deux pics d'émission à des longueurs d'onde différentes dans la gamme des longueurs d'onde visibles. La couleur perçue (par la rétine) est alors issue d'un mélange entre les différentes longueurs d'ondes. Il peut s'agir d'une LED, et/ou d'un afficheur à LED(s), avec un spectre d'émission présentant un pic d'émission principal et un autre pic d'émission, par exemple de fluorescence, plus large que le pic principal, et généralement de plus faible intensité. La LED polychromatique émet en particulier selon une première émission (de forte ou de faible intensité) comprise entre 400 et 500 nm et selon une deuxième émission (de forte ou de faible intensité) dans le visible au-delà de 500 nm (cas par exemple de LEDs formées d'au moins un cristal électroluminescent et de phosphore(s) photoluminescent(s)). On peut notamment utiliser comme sources des LEDs blanches, des LEDs à émissions polychromatiques formées par exemple de trois sources monochromatiques d'intensités réglées de manière indépendante de type « RGB » (avec trois sources : rouge, verte et bleue), etc.

Une ou des sources peuvent également être intégrées dans ou couplées à ou combinées à une ou des structure(s) de type afficheur(s) (par exemple à diodes électroluminescentes dits « à 7 segments » ou à cristaux liquides), bandeau ou écran de commande électronique à touches sensitives et affichage digital (le cas échéant par communication sans fils à l'aide d'une interface), ou intégrées dans un autre dispositif tel qu'une hotte aspirante comme indiqué précédemment, etc

Outre la ou les sources, l'article selon l'invention peut aussi comprendre au moins un guide d'onde destiné à propager la lumière d'une partie à l'autre de l'article (en particulier par réflexion totale interne ou par réflexion métallique), le cas échéant lorsque les sources sont placées sous le plan de travail, chaque source lumineuse étant alors rattachée au guide concerné et coopérant avec celui-ci en émettant en son sein son rayonnement lumineux afin que le guide le transmette, la ou les sources lumineuses émettant/étant couplées par exemple par la tranche ou chant du guide. Ce guide est avantageusement clair ou transparent, et peut être rapporté (assemblé après avoir été conçu séparément) par exemple sous la face inférieure de la plaque. Il peut être organique et/ou plastique (par exemple en polycarbonate ou polyméthacrylate de méthyle PMMA), ou minéral (par exemple il peut être en verre). L'article selon l'invention peut comprendre plusieurs guides dédiés chacun à une ou plusieurs zones d'éclairage, ou un guide unitaire, pourvu le cas échéant d'ouvertures. L'assemblage du guide peut se faire directement sur le substrat ou sur une autre partie de l'équipement ou d'un support, par exemple peut être solidarisé au caisson sur lequel repose le plan de travail. Le guide permet, entre autres, de mieux conduire la lumière jusqu'aux zones d'éclairage voulues.

Dans le cas notamment où une ou des sources sont placées sous le plan de travail, le cas échéant associées à au moins un guide d'onde, l'équipement peut également comprendre dans la zone d'éclairage, au moins un moyen d'extraction du rayonnement émis par la ou les sources, par exemple un ou des éléments ou traitement(s) diffusants, en particulier une couche rapportée sur la surface et/ou tout traitement ou texturation différentielle de la surface (local ou sur toute la surface) du guide d'onde ou de la surface d'extraction, comme la gravure laser, l'impression d'émail, l'attaque chimique (acide..) ou mécanique (sablage...), etc. Une surface d'extraction peut le cas échéant être prévue dans l'épaisseur du guide, suivant par exemple une technologie de gravure interne par laser. La géométrie et la rugosité du bord d'un guide d'onde peuvent également être travaillés pour permettre une extraction locale et contrôlée de la lumière. Le ou les moyens d'extraction permettent d'extraire les rayonnements du guide vers la zone d'éclairage voulue. Ils peuvent être combinés le cas échéant avec un autre traitement permettant de cibler les zones d'éclairage, par exemple avec une sérigraphie occultante (masquant certaines zones et empêchant le passage de la lumière) déposée sur une partie d'une face du substrat.

Le cas échéant, l'équipement peut également comprendre au moins un filtre (couplé (en fonctionnement) à au moins une source, de façon à former une zone lumineuse colorée de couleur choisie, ce filtre étant positionné généralement entre la source et la plaque et pouvant notamment être combiné (ou solidarisé) à la source et/ou à un autre élément intermédiaire et/ou à la plaque.

Par "filtre" on entend un filtre optique (à action sur la transmission de la lumière), en particulier coloré (l'action sur la transmission de la longueur d'onde se faisant en fonction des longueurs d'onde), ce filtre étant en particulier un élément ou matériau, généralement plan, notamment sous forme de film ou couche ou composite, à base d'au moins un matériau organique ou minéral, (semi-)transparent (dans le sens notamment où il est transparent à certaine(s) longueur(s) d'onde du visible et non transparent à/en bloquant/en affectant d'autre(s)), en particulier permettant d'absorber et/ou de réfléchir et/ou de réémettre certaines longueurs d'onde du spectre visible. Ce filtre peut être notamment un filtre par absorption (l'action sur la transmission de la lumière se faisant par absorption à certaines longueurs d'onde, la lumière absorbée pouvant notamment être convertie en chaleur et/ou émise à d'autres longueurs d'onde), ou un filtre par réflexion (l'action sur la transmission de la lumière se faisant par réflexion à certaines longueurs d'onde). Le filtre peut être rapporté (fabriqué séparément) et combiné à au moins une source lumineuse et/ou à un autre élément intermédiaire, ou au plan de travail, ou il peut être intégré ou réalisé directement sur ladite source et/ou ledit élément et/ou ledit plan, par exemple sous forme d'une couche imprimée, par exemple par jet d'encre. Le rayonnement émis par la source passe par le filtre correctif afin de produire l'affichage recherché sur ou au travers du substrat auquel cet ensemble est combiné. Le filtre peut permettre de former différentes couleurs, par exemple au moins une zone colorée de couleur blanche ou d'une couleur de synthèse obtenue par un mélange à plusieurs longueurs d'onde.

L'équipement selon l'invention, selon les sources utilisées (et le cas échéant les filtres utilisés) et leurs emplacements, peut présenter une ou plusieurs zones lumineuses/d'affichage à usage fonctionnel et/ou décoratif, la ou lesdites zones pouvant être dans toute zone de la plaque (y compris zones de chauffe), et l'on peut avoir plusieurs zones lumineuses/d'affichage différenciées (couleur, niveau de luminance), et/ou chaque zone peut elle-même présenter différentes couleurs.

Comme indiqué précédemment, l'équipement selon l'invention comporte également au moins une interface de communication avec au moins un élément du plan (tel que la ou les sources lumineuses et/ou le ou les éléments de chauffage), et/ou avec un élément extérieur du plan, par exemple pour une communication sans fil.

Cette interface de communication (homme-machine ou machine-machine notamment) peut être un dispositif permettant notamment de commander ou transmettre les commandes aux éléments de chauffage et/ou aux sources lumineuses, à partir de ou par l'intermédiaire de boutons ou touches de commande intégrées au plan de travail ou déportées sur un élément extérieur avantageusement amovible ou mobile, dans le cas notamment d'une commande par communication sans fil.

De préférence, l'interface permet la communication sans fil avec une unité extérieure au plan de travail (cette unité pouvant faire partie de l'équipement selon l'invention et pouvant elle-même constituer une interface), permettant par exemple l'activation à distance des zones chauffantes et/ou des sources lumineuses et/ou la commande de différentes fonctions (augmentation ou diminution de la puissance ou du temps de chauffe, affichage de données sur la plan de travail, etc), les commandes données par l'unité extérieure étant transmises par l'interface aux composants concernés de l'équipement. L'interface peut également être une interface de commande située au niveau du plan (bandeau de commande) transmettant les commandes par fils ou éventuellement sans fils à d'autres composants du plan ou hors du plan (par exemple aux sources déportées du plan pour l'éclairage par projection).

L'unité extérieure dans le cas d'une commande à distance peut être par exemple sous forme d'un clavier, d'une tablette ou d'un écran tactile, d'un téléphone mobile, cette unité pouvant être fixe (par exemple fixée sur un mur) ou mobile. Ce mode de réalisation présente notamment l'avantage d'éviter les traces de doigts (inesthétiques et visibles sur les matériaux verriers) sur le plan de travail ou les zones de cuisson. L'activation des commandes à distance permet également de réduire les risques de brûlures en évitant la manipulation des commandes à proximité des zones de cuisson. Dans un soucis de sécurité notamment, la communication sans fil peut être avantageusement prévue pour être de portée limitée (par exemple limitée au volume de la pièce dans laquelle l'équipement se trouve) et/ou munie de sécurités pour éviter l'activation par mégarde par une personne non présente. La communication sans fils s'effectue en particulier par ondes électromagnétiques ou radioélectriques, le cas échéant à l'aide de systèmes de type Bluetooth, WLAN, wifi, etc.

L'interface peut permettre de transmettre différents signaux initiés par contact ou même par mouvement pour activer différents composants comme déjà évoqué (par exemple elle peut convertir un mouvement, détecté par des capteurs par triangulation, ces capteurs étant reliés à cette interface (et en faisant partie le cas échéant), en l'activation d'une fonction (par exemple l'augmentation de la puissance de chauffe, éclairage des zones de chauffe, etc.). Elle peut également permettre le téléchargement et/ou la transmission de données diverses (telles que pages internet, fonds d'écrans, recettes de cuisine, etc.), ces données étant par exemple transmises à des sources lumineuses permettant en particulier leur affichage à la surface du plan de travail.

Au moins une interface est généralement située sur ou sous le plan de travail ou à proximité. L'équipement selon l'invention peut également comprendre plusieurs interfaces, de même type ou différentes, permettant par exemple l'activation de différents éléments, ou l'équipement peut comprendre plusieurs interfaces, fonctionnant le cas échéant différemment (de constitution différente, opérant à différentes fréquences, etc.) pour piloter un même élément (par exemple une zone de chauffe) avec un niveau renforcé de sécurité. Le cas échéant, il peut être prévu notamment une interface permettant de coordonner l'activation des zones de chauffe avec l'activation des sources lumineuses. L'interface peut être formée de capteur(s), connecteur(s), élément(s) de commande, tout autre composant électrique ou électronique ou électromagnétique, etc..

De préférence, l'équipement selon l'invention comprend au moins une interface de communication avec au moins un élément extérieur pour l'activation de différentes zones et/ou fonctions du substrat par communication sans fil, en particulier lorsque la transmission lumineuse T_{L} du substrat est faible.

Outre l'interface, l'équipement ou le plan de travail peuvent être munis de différents câbles, connecteurs ou autres éléments, notamment électriques contribuant à la transmission de commandes d'une partie à l'autre de l'équipement.

L'équipement, en particulier le plan de travail, selon l'invention peut également comporter divers revêtements fonctionnels et/ou décoratifs, notamment parmi ceux généralement utilisés avec les matériaux verriers concernés, par exemple à base d'émail, de peinture, de couche(s) mince(s) (par exemple métallique(s), diélectrique(s), etc.), etc. Par exemple, l'une des faces du substrat peut comporter une ou des couches ou un ou des motifs en émail, à but décoratif et/ou afin de signaler un ou des éléments (afficheurs, zones de cuisson, etc.), et/ou servant de couche colorante ou de masquage et/ou pour d'autres fonctions (comme extracteur de lumière ou pour homogénéiser l'éclairage, etc.). En particulier, le plan de travail peut être muni d'une couche fonctionnelle lui conférant une ou des propriétés supplémentaires telles qu'anti-rayure, renforcement mécanique, etc.. Le revêtement peut être effectué par exemple par des procédés tels que la sérigraphie, le dépôt par pulvérisation cathodique, le jet d'encre ou d'émail, etc, le revêtement pouvant être appliqué notamment sur la face apparente ou sur la face opposée, selon le type de revêtement et la fonction recherchée. Par exemple, dans le cas d'un décor par émail, celui-ci est préférentiellement déposé en face supérieure pour des raisons de visibilité notamment, tandis qu'une couche opacifiante (tel que le revêtement mentionné selon l'invention) est préférentiellement déposée sur la face opposée non apparente pour une meilleure protection contre l'abrasion notamment, etc.

Comme indiqué précédemment, les décorations (ou au moins une partie d'entre elles) ou affichages du plan de travail peuvent également être obtenus avec avantages par affichage lumineux (plutôt que par dépôt d'un revêtement), en particulier par projection lumineuse sur le plan formant écran, comme déjà évoqué précédemment.

Selon un aspect ne faisant pas partie des revendications, il est également décrit un procédé de fabrication d'un équipement selon l'invention, en particulier du plan de travail dudit équipement, lorsque ce plan de travail est formé d'au moins un substrat en vitrocéramique de surface supérieure à 0.7 m², dans lequel on effectue au moins un cycle de céramisation d'une plaque de verre de surface supérieure à 0.7 m² pour obtenir ledit substrat, et selon lequel on réduit la vitesse de passage d'au moins 25%, de préférence d'au moins 50%, ou on augmente la longueur de l'arche de céramisation ou le temps de séjour dans ladite arche d'au moins 25%, de préférence d'au moins 50%, par rapport respectivement à la vitesse, la longueur ou le temps de séjour optimaux ou usuels pour obtenir un substrat en vitrocéramique de surface inférieure à 0.4 m².

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...). Le procédé peut également comprendre une étape de laminage ou effondrement pour former des reliefs particuliers.

Dans le présent procédé, la vitrocéramique suit un cycle de céramisation lui donnant les propriétés recherchées, en particulier un aspect transparent.

D'autres détails et caractéristiques avantageuses ressortiront ci-après de la description d'un mode de réalisation non limitatif de l'invention en référence aux dessins annexés dans lesquels :
- La figure 1 représente une vue schématique en perspective d'un équipement selon l'invention;
- La figure 2 représente une vue schématique de dessus d'un équipement similaire (les ustensiles à la surface ou les éléments sous-jacents de meuble n'étant pas représentés);
- la figure 3 représente une vue schématique de côté dans laquelle un pan du meuble (23) a été enlevé pour laisser apparaitre certains composants de l'équipement.

Dans cet exemple l'équipement (1) selon l'invention comprend un meuble (2) formé d'un caisson (4) surmonté d'un plan de travail (5) formé d'au moins un substrat en vitrocéramique de 2 m² de surface, formé d'une plaque (monolithique) vitrocéramique transparente (6) (la vitrocéramique présentant intrinsèquement un transmission lumineuse TL de 88%), cette plaque en vitrocéramique étant munie d'un revêtement (10) en peinture de 42 µm d'épaisseur à base de résines silicone incluant des pigments noirs, cette plaque revêtue étant du type de celle commercialisée sous la référence KeraResin par la société Eurokera, cette plaque présentant une face supérieure lisse et une face inférieure lisse (cette face pouvant également être munie de picots) et une épaisseur de 4 mm, le substrat revêtu présentant un flou de 66.7%, une transmission lumineuse T_{L} de 0.03%, et un indicateur d'opacité de 99.96. Ce substrat est par exemple obtenu en réduisant dans le procédé de fabrication de vitrocéramiques de type KeraResin la vitesse de passage dans l'arche de céramisation de 50%.

Le substrat en vitrocéramique obtenu présente une planéité de moins de 2 mm (la planéité obtenue étant entre 2 et 3 mm pour une vitesse réduite de 25% seulement, et étant de plus de 15 mm pour une vitesse inchangée par rapport à celle utilisée dans la demande précitée pour obtenir une plaque de dimensions standards inférieure à 0.4 m²), la planéité recherchée pour de bonnes propriétés optiques et de bonnes propriétés de couplage et rendement thermiques notamment, étant inférieure à 3 mm, de préférence inférieure à 2 mm.

L'équipement comprend en outre dans le présent exemple trois éléments de chauffage (7), par exemple des inducteurs, disposés sous la plaque (6). Ces inducteurs sont dans le cas présent répartis au milieu de la surface de travail, mais pourraient tout aussi bien se trouver localisés à une extrémité du plan.

L'équipement comprend également trois sources lumineuses (8), destinées à signaler les emplacements de cuisson et placées au-dessus du substrat (et surplombant le plan de travail). Ces sources permettent de signaler les emplacements de cuisson, à l'aide par exemple d'un disque ou d'un cercle lumineux de couleur (9) délimitant chaque emplacement (les couleurs pouvant le cas échéant être identiques ou différentes selon les emplacements) et entourant les inducteurs, lorsque ces sources sont activées, voire lorsque les éléments de chauffage sont activés si les sources sont connectées audits éléments par une interface appropriée. Les sources (8) sont formées par exemple d'une pluralité de LEDs portées par une embase logée dans un profilé, et sont par exemple intégrées dans une hotte aspirante (14) surplombant le plan de travail. Ces sources outre la signalisation des zones de chauffe, peuvent également ou alternativement servir à l'éclairage (local ou total) du plan de travail, ou à l'affichage par projection de diverses informations, telles que l'affichage de données, de recettes de cuisine (11), etc.

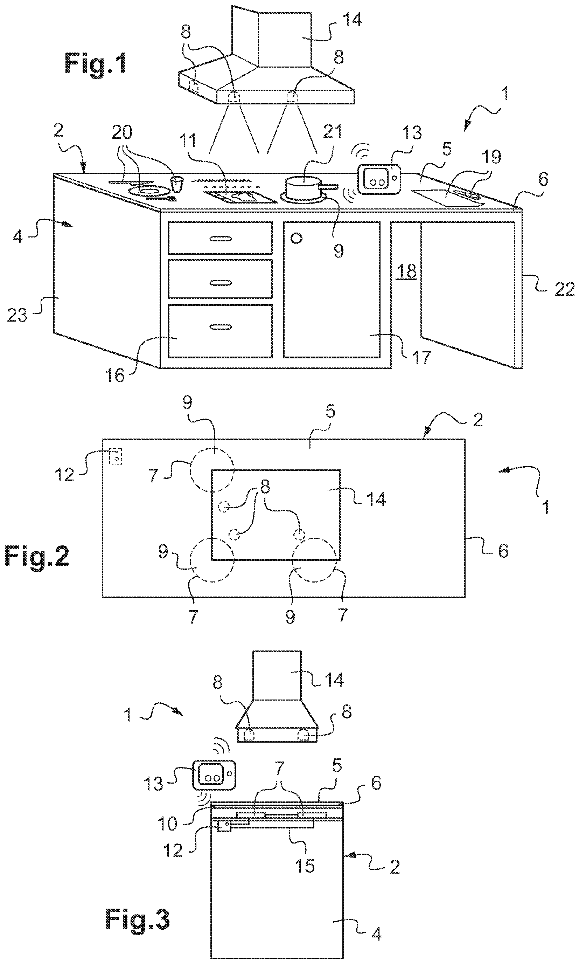

L'équipement comprend en outre au moins une interface de communication (12) (cachée par le substrat) avec les éléments de chauffage, et le cas échéant avec les sources lumineuses, cette interface communiquant également sans fils avec une unité extérieure sous forme, par exemple, d'une tablette tactile (13) pour l'activation de différentes zones et fonctions de la plaque ou de l'équipement. L'unité extérieure peut être avantageusement mobile et reposer sur le plan de travail (figure 1) ou servir pour l'activation à distance (figure 3) de différentes zones ou fonctions. Alternativement ou cumulativement, l'interface pourrait également comprendre ou être reliée à un bandeau de commande fixe situé en surface du substrat (2) pour l'activation de différentes zones et fonctions, en particulier du substrat.

L'équipement comporte également d'autres éléments, notamment des câbles électriques (15) pour l'activation des éléments chauffants et pour l'activation des sources, et comporte des tiroirs (16) ou des placards (17) aménagés dans le caisson supportant le plan de travail, pour le rangement de divers articles, etc. L'équipement peut également comporter d'autres éléments, par exemple le plan de travail peut comporter un encadrement, le substrat peut être revêtu d'un décor permanent, localisé ou non, par exemple en émail, le caisson peut être plein ou comporter différents évidements (tel que l'évidement (18), ou intégrer d'autres éléments (par exemple un four encastré, etc.). Le plan de travail (5) peut servir pour différents usages, tels que l'écriture (comme symbolisée par le papier et le stylo (19)), le support d'objets (comme symbolisé par la vaisselle (20)) tout en permettant la cuisson d'aliments (comme symbolisé par les récipients de cuisson (21)), etc. Le cas échéant, le caisson peut également être remplacés par des pieds supports (par exemple uniquement les parois 22 et 23, ou quatre pieds au quatre coins, l'équipement sous le plan de travail dans ce cas étant préférentiellement caché par un coffrage localisé de quelques centimètres d'épaisseur sous le substrat) à l'image d'une table.

L'équipement selon l'invention peut notamment être utilisé avec avantages pour réaliser une nouvelle gamme de meubles multi-usages et intéractifs intégrant notamment des zones ou une fonction de cuisson.

## Revendications

1. Equipement mobilier et/ou ménager (1), avantageusement interactif, comprenant :
- au moins un plan de travail (5) formé d'au moins un substrat (6) en matériau verrier transparent monolithique, muni d'un revêtement de façon à ce que le substrat muni du revêtement présente une transmission lumineuse TL inférieure à 60%, et un indicateur d'opacité supérieur à 85,
- au moins un élément de chauffage (7),
- au moins une source lumineuse (8), destinée à rendre visible une ou des zones ou affichages du substrat, cette source se trouvant à l'aplomb du substrat (6) pour un affichage par projection, ou sous le substrat pour un affichage par transmission au travers du substrat,
- au moins une interface de communication (12) avec au moins un élément de l'équipement (1) tel que la ou les sources lumineuses (8/) et/ou le ou les éléments de chauffage (7), et/ou avec au moins un élément extérieur pour une communication sans fil, **caractérisé en ce que**:
le substrat (6) est de surface supérieure à 0.7 m2, et **en ce que**
le substrat muni du revêtement présente un flou supérieur à 15 %, le dit flou étant défini comme le rapport de la transmission diffuse sur la transmission totale à une longueur d'onde égale à 550 nm.

2. Equipement (1) selon la revendication 1, **caractérisé en ce que** la surface du substrat (6) en matériau verrier est supérieure à 0.9 m2, notamment supérieure à 1m2, en particulier d'au moins 2 m2, l'épaisseur dudit substrat étant d'au moins 2 mm, notamment d'au moins 2.5 mm, en particulier est de l'ordre de 3 à 30 mm, et avantageusement est inférieure à 15 mm, en particulier est de l'ordre de 3 à 15 mm.

3. Equipement (1) selon l'une des revendications 1 ou 2, **caractérisé en ce que** le substrat (6) présente une planéité inférieure à 3 mm, notamment inférieure à 2 mm, en particulier inférieure à 1 mm.

4. Equipement (1) selon l'une des revendications 1 à 3, **caractérisé en ce que** le substrat (6) est en verre trempé ou en vitrocéramique, et de préférence est en vitrocéramique.

5. Equipement (1) selon l'une des revendications 1 à 4, **caractérisé en ce que** le matériau verrier présente une transmission lumineuse TL supérieure à 60%, en particulier supérieure à 80%, et **en ce que** le substrat (6) en matériau verrier muni du revêtement présente préférentiellement un flou supérieur à 40%, voire supérieur à 60%, une transmission lumineuse TL inférieure à 30%, et un indicateur d'opacité supérieur à 90.

6. Equipement (1) selon l'une des revendications 1 à 5, **caractérisé en ce que** le matériau verrier comprend des colorants.

7. Equipement (1) selon l'une des revendications 1 à 6, **caractérisé en ce que** l'équipement (1) comprend comme élément(s) de chauffage (7) un ou plusieurs moyens de chauffage par induction, le ou les éléments de chauffage (7) pouvant être localisés dans une ou plusieurs zones du substrat (6), ou être uniformément répartis sous le substrat (6), occupant par exemple au moins 25% de la surface du substrat (6), ou occuper plus de 50 %, notamment plus de 75%, voire plus de 85%, de la surface du substrat (6).

8. Equipement selon l'une des revendications 1 à 7, **caractérisé en ce que** ledit plan de travail (5) comporte des emplacements de cuisson situés à l'aplomb du au moins un élément de chauffage, et signalés, sur activation ou en permanence, au moyen de la ou les sources lumineuses (8) et/ou au moyen d'une décoration, par exemple en émail.

9. Equipement (1) selon la revendication 8, **caractérisé en ce que** les emplacements de cuisson sont signalés par, et/ou mis en évidence ou au moyen de la au moins une source lumineuse (8), sur activation de ladite source (8), ladite source (8) étant placée au-dessus du substrat (6), et permettant un affichage lumineux par projection sur cette face formant écran.

10. Equipement (1) selon la revendication 8, **caractérisé en ce que** le substrat (6) revêtu présente une transmission lumineuse TL d'au moins 5%, et le ou les emplacements de cuisson sont signalés par, et/ou mis en évidence au moyen de la au moins une source lumineuse, sur activation de ladite source, ladite source étant placée sous le substrat (6) et étant cachée par celui-ci au repos, ladite source permettant un affichage lumineux par transmission au travers du plan de travail (5).

11. Equipement (1) selon l'une des revendications 1 à 10, **caractérisé en ce que** la ou les sources lumineuses (8) sont activables par contact sur la surface du plan (5) et/ou sur l'interface et/ou sur une unité extérieure, ou par mouvement de la main.

12. Equipement (1) selon l'une des revendications 1 à 11, **caractérisé en ce que** l'équipement (1) comprend plusieurs sources lumineuses (8), disposées de façon que l'angle entre chaque source (8), ou entre chaque élément envoyant la lumière vers le plan de travail (5), et la normale au plan de travail (5), soit compris entre 5 et 60°, de préférence entre 30 et 45°, pour minimiser les effets d'ombre projetée par une personne opérant sur le plan de travail (5).

13. Equipement selon l'une des revendications 1 à 12, **caractérisé en ce que** l'interface (12) permet la communication sans fil, avec une unité extérieure au plan de travail (5), permettant l'activation à distance des éléments de chauffage (7) et/ou des sources lumineuses (8) l'unité extérieure étant par exemple sous forme d'un clavier, d'une tablette ou d'un écran tactile (13) ou d'un téléphone mobile, cette unité pouvant être fixe ou mobile, la communication sans fil étant limitée au volume de la pièce dans laquelle l'équipement (1) se trouve.

14. Equipement (1) selon l'une des revendications 1 à 13, **caractérisé en ce que** l'interface (12) permet de commander ou transmettre les commandes aux éléments de chauffage et/ou aux sources lumineuses par contact ou mouvement et/ou permet le téléchargement et/ou la transmission de données telles que des pages internet, des fonds d'écrans ou des recettes de cuisine, ces données étant transmises à des sources lumineuses (8) permettant leur affichage à la surface du plan de travail (5).

15. Equipement (1) selon l'une des revendications 1 à 14, **caractérisé en ce que** l'équipement (1) comprend une ou plusieurs interfaces (12), de même type ou différentes, permettant de coordonner l'activation des éléments de chauffage (7) avec l'activation des sources lumineuses (8).

16. Equipement (1) selon l'une des revendications 1 à 15, **caractérisé en ce que** le plan de travail (5) comprend un ou plusieurs revêtements fonctionnels et/ou décoratifs à base d'émail ou de peinture ou de couche(s) mince(s).

17. Equipement (1) selon l'une des revendications 1 à 16, **caractérisé en ce que** le plan de travail (5) est monté horizontalement, sur au moins un ou des éléments supports, tels qu'un caisson (4) d'un meuble (2) ou un ou des pieds supports, formant ainsi avec lesdits éléments supports une table, un meuble, plein ou non, ou un comptoir.

## Patentansprüche

1. Möbelausstattung und/oder Haushaltsgeräte (1), vorzugsweise interaktiv, umfassend:
- mindestens eine Arbeitsfläche (5), die aus mindestens einem Substrat (6) aus monolithischem transparenten Glasmaterial gebildet ist, das mit einer Beschichtung versehen ist, sodass das mit der Beschichtung versehene Substrat eine Lichtdurchlässigkeit TL von weniger als 60 % und einen Trübungsindikator von mehr als 85 aufweist,
- mindestens ein Heizelement (7),
- mindestens eine Lichtquelle (8), die dazu bestimmt ist, eine oder mehrere Bereiche oder Anzeigen des Substrats sichtbar zu machen, wobei sich diese Quelle für eine Anzeige durch Projektion senkrecht über dem Substrat (6) oder für eine Anzeige durch Transmission durch das Substrat unter dem Substrat befindet,
- mindestens eine Kommunikationsschnittstelle (12) mit mindestens einem Element der Ausstattung/Geräte (1), wie der oder den Lichtquellen (8/) und/oder dem oder den Heizelementen (7), und/oder mit mindestens einem externen Element für eine drahtlose Kommunikation, **dadurch gekennzeichnet, dass**:
das Substrat (6) eine Oberfläche von mehr als 0,7 m2 aufweist, **und dadurch, dass**
das Substrat, das mit der Beschichtung versehen ist, eine Unschärfe von mehr als 15 % aufweist, wobei die Unschärfe als das Verhältnis der diffusen Transmission zur Gesamttransmission bei einer Wellenlänge gleich 550 nm definiert ist.

2. Ausstattung und/oder Gerät (1) nach Anspruch 1,
**dadurch gekennzeichnet, dass** die Oberfläche des Substrats (6) aus Glasmaterial größer als 0,9 m2, besonders größer als 1 m2, insbesondere mindestens 2 m2 ist, wobei die Dicke des Substrats bei mindestens 2 mm, besonders bei mindestens 2,5 mm, insbesondere in der Größenordnung von 3 bis 30 mm liegt und vorteilhafterweise kleiner als 15 mm ist, insbesondere in der Größenordnung von 3 bis 15 mm.

3. Ausstattung und/oder Gerät (1) nach einem der Ansprüche 1 bis 2,
**dadurch gekennzeichnet, dass** das Substrat (6) eine Ebenheit kleiner als 3 mm, besonders kleiner als 2 mm, ganz besonders kleiner als 1 mm aufweist.

4. Ausstattung und/oder Gerät (1) nach einem der Ansprüche 1 bis 3,
**dadurch gekennzeichnet, dass** das Substrat (6) aus thermisch vorgespanntem Glas oder aus Glaskeramik und vorzugsweise aus Glaskeramik besteht.

5. Ausstattung und/oder Gerät (1) nach einem der Ansprüche 1 bis 4,
**dadurch gekennzeichnet, dass** das Glasmaterial eine Lichtdurchlässigkeit TL von mehr als 60 %, insbesondere mehr als 80 % aufweist, **und dadurch, dass** das Substrat (6) aus Glasmaterial, das mit der Beschichtung versehen ist, vorzugsweise eine Unschärfe von mehr als 40 % oder sogar mehr als 60 %, eine Lichtdurchlässigkeit TL von weniger als 30 % und einen Trübungsindikator von mehr als 90 aufweist.

6. Ausstattung und/oder Gerät (1) nach einem der Ansprüche 1 bis 5,
**dadurch gekennzeichnet, dass** das Glasmaterial Farbstoffe umfasst.

7. Ausstattung und/oder Gerät (1) nach einem der Ansprüche 1 bis 6,
**dadurch gekennzeichnet, dass** die Ausstattung und/oder das Gerät (1) als Heizelement(e) (7) ein oder mehrere Induktionsheizmittel umfasst, wobei das oder die Heizelemente (7) in einem oder mehreren Bereichen des Substrats (6) angeordnet oder unter dem Substrat (6) gleichmäßig verteilt sein können, wobei sie beispielsweise mindestens 25 % der Oberfläche des Substrats (6) einnehmen oder mehr als 50 %, besonders mehr als 75 %, sogar mehr als 85 % der Oberfläche des Substrats (6) einnehmen.

8. Ausstattung und/oder Gerät nach einem der Ansprüche 1 bis 7,
**dadurch gekennzeichnet, dass** die Arbeitsfläche (5) Kochstellen umfasst, die sich senkrecht über mindestens einem Heizelement befinden und mittels der einen oder den mehreren Lichtquellen (8) und/oder mittels einer Dekoration, beispielsweise aus Email, bei Aktivierung oder permanent angezeigt werden.

9. Ausstattung und/oder Gerät (1) nach Anspruch 8,
**dadurch gekennzeichnet, dass** die Kochstellen oder mittels der mindestens einen Lichtquelle (8) bei Aktivierung der Quelle (8) angezeigt und/oder deutlich hervorgehoben werden, wobei die Quelle (8) über dem Substrat (6) angeordnet ist und eine Lichtanzeige durch Projektion auf dieser Fläche ermöglicht, die einen Bildschirm bildet.

10. Ausstattung und/oder Gerät (1) nach Anspruch 8,
**dadurch gekennzeichnet, dass** das beschichtete Substrat (6) eine Lichtdurchlässigkeit TL von mindestens 5 % aufweist und die Kochstelle oder die Kochstellen mittels der mindestens einen Lichtquelle bei Aktivierung der Quelle angezeigt und/oder deutlich hervorgehoben wird/werden, wobei die Quelle unter dem Substrat (6) angeordnet ist und durch dieses im Ruhezustand verdeckt wird, wobei die Quelle eine Lichtanzeige durch Transmission durch die Arbeitsfläche (5) ermöglicht.

11. Ausstattung und/oder Gerät (1) nach einem der Ansprüche 1 bis 10,
**dadurch gekennzeichnet, dass** die Lichtquelle(n) (8) durch Kontakt auf der Oberfläche der Ebene (5) und/oder auf der Schnittstelle und/oder auf einer externen Einheit oder durch Handbewegung aktiviert werden können.

12. Ausstattung und/oder Gerät (1) nach einem der Ansprüche 1 bis 11,
**dadurch gekennzeichnet, dass** die Ausstattung und/oder das Gerät (1) mehrere Lichtquellen (8) umfasst, die so angeordnet sind, dass der Winkel zwischen jeder Quelle (8) oder zwischen jedem Element, das Licht in Richtung der Arbeitsfläche (5) sendet, und der Normalen der Arbeitsfläche (5) zwischen 5 und 60°, vorzugsweise zwischen 30 und 45° beträgt, um Schatteneffekte zu minimieren, die von einer an der Arbeitsfläche (5) arbeitenden Person geworfen werden.

13. Ausstattung und/oder Gerät nach einem der Ansprüche 1 bis 12,
**dadurch gekennzeichnet, dass** die Schnittstelle (12) die drahtlose Kommunikation mit einer Einheit außerhalb der Arbeitsfläche (5) ermöglicht, die die Fernaktivierung von Heizelementen (7) und/oder Lichtquellen (8) ermöglicht, wobei die Außeneinheit beispielsweise in Form einer Tastatur, einer Tablet-Tastatur oder eines Touchscreens (13) oder eines Mobiltelefons vorliegt, wobei diese Einheit stationär oder bewegbar sein kann, wobei die drahtlose Kommunikation auf das Volumen des Raums beschränkt ist, in dem sich die Ausstattung/das Gerät (1) befindet.

14. Ausstattung und/oder Gerät (1) nach einem der Ansprüche 1 bis 13,
**dadurch gekennzeichnet, dass** die Schnittstelle (12) das Steuern oder Übertragen der Befehle an die Heizelemente und/oder die Lichtquellen durch Kontakt oder Bewegung erlaubt und/oder das Herunterladen und/oder das Übertragen von Daten, wie Internetseiten, Bildschirmhintergründen oder Kochrezepten ermöglicht, wobei diese Daten an Lichtquellen (8) übertragen werden, was ihre Anzeige auf der Oberfläche der Arbeitsfläche (5) ermöglicht.

15. Ausstattung und/oder Gerät (1) nach einem der Ansprüche 1 bis 14,
**dadurch gekennzeichnet, dass** die Ausstattung/das Gerät (1) eine oder mehrere Schnittstellen (12) derselben Art oder unterschiedlicher Art umfasst, die das Koordinieren der Aktivierung der Heizelemente (7) mit der Aktivierung der Lichtquellen (8) ermöglichen.

16. Ausstattung und/oder Gerät (1) nach einem der Ansprüche 1 bis 15,
**dadurch gekennzeichnet, dass** die Arbeitsfläche (5) eine oder mehrere Funktions- und/oder Zierbeschichtungen auf der Basis von Email oder Farbe oder einer dünnen Schicht (dünner Schichten) umfasst.

17. Ausstattung und/oder Gerät (1) nach einem der Ansprüche 1 bis 16,
**dadurch gekennzeichnet, dass** die Arbeitsfläche (5) horizontal auf mindestens einem Tragelement oder Tragelementen, wie einem Gehäuse (4) eines Möbels (2) oder einem Stützfuß oder Stützfüßen, angebracht ist, wodurch sie mit den Tragelementen einen Tisch, ein Möbel, massiv oder nicht, oder eine Theke bildet.

## Claims

1. Item of furniture and/or household equipment (1), which is advantageously interactive, comprising:
- at least one worktop (5) formed by at least one substrate (6) which is made of monolithic transparent glass material and is provided with a coating so that the substrate provided with the coating has a light transmission TL less than 60%, and an opacity indicator greater than 85,
- at least one heating element (7),
- at least one light source (8), intended to make one or more zones or displays of the substrate visible, this source being directly above the substrate (6) for display by projection, or below the substrate for display by transmission through the substrate,
- at least one interface (12) for communication with at least one element of the item (1) such as the light source(s) (8/) and/or the heating element(s) (7), and/or with at least one external element for wireless communication, **characterized in that:**
the substrate (6) has a surface area greater than 0.7 m2, **and in that**
the substrate provided with the coating has a haze greater than 15%, said haze being defined as the ratio of the diffuse transmission to the total transmission at a wavelength equal to 550 nm.

2. Item (1) according to claim 1, **characterized in that** the surface area of the substrate (6) made of glass material is greater than 0.9 m2, in particular greater than 1 m2, more particularly at least 2 m2, the thickness of said substrate being at least 2 mm, in particular at least 2.5 mm, more particularly approximately 3 to 30 mm, and advantageously less than 15 mm, more particularly approximately 3 to 15 mm.

3. Item (1) according to either claim 1 or claim 2, **characterized in that** the substrate (6) has a flatness less than 3 mm, in particular less than 2 mm, more particularly less than 1 mm.

4. Item (1) according to any of claims 1 to 3, **characterized in that** the substrate (6) is made of tempered glass or of glass-ceramic and is preferably made of glass-ceramic.

5. Item (1) according to any of claims 1 to 4, **characterized in that** the glass material has a light transmission TL greater than 60%, in particular greater than 80%, **and in that** the substrate (6) made of glass material and provided with the coating preferably has a haze greater than 40%, or greater than 60%, a light transmission TL less than 30%, and an opacity indicator greater than 90.

6. Item (1) according to any of claims 1 to 5, **characterized in that** the glass material comprises colorants.

7. Item (1) according to any of claims 1 to 6, **characterized in that** the item (1) comprises, as the heating element(s) (7), one or more inductive heating means, it being possible for the heating element(s) (7) to be located in one or more zones of the substrate (6) or to be uniformly distributed under the substrate (6), occupying for example at least 25% of the surface area of the substrate (6), or to occupy more than 50%, in particular more than 75%, or more than 85%, of the surface area of the substrate (6).

8. Item according to any of claims 1 to 7, **characterized in that** said worktop (5) comprises cooking locations located directly above the at least one heating element, and indicated, upon activation or permanently, by means of the light source(s) (8) and/or by means of a decoration, for example made of enamel.

9. Item (1) according to claim 8, **characterized in that** the cooking locations are indicated by and/or highlighted or by means of the at least one light source (8) upon activation of said source (8), said source (8) being placed above the substrate (6) and enabling a light display by projection onto this face, which forms a screen.

10. Item (1) according to claim 8, **characterized in that** the coated substrate (6) has a light transmission TL of at least 5%, and the cooking location(s) are indicated by and/or highlighted by means of the at least one light source upon activation of said source, said source being placed under the substrate (6) and being hidden by said substrate when not in operation, said source enabling a light display by transmission through the worktop (5).

11. Item (1) according to any of claims 1 to 10, **characterized in that** the light source(s) (8) can be activated by contact with the surface of the plane (5) and/or with the interface and/or with an external unit, or by movement of the hand.

12. Item (1) according to any of claims 1 to 11, **characterized in that** the item (1) comprises a plurality of light sources (8), which are arranged such that the angle between each source (8), or between each element sending the light to the worktop (5), and the normal to the worktop (5), is between 5 and 60°, preferably between 30 and 45°, to minimize the shadow effects projected by a person working on the worktop (5).

13. Item according to any of claims 1 to 12, **characterized in that** the interface (12) enables wireless communication with a unit external to the worktop (5), enabling remote activation of the heating elements (7) and/or of the light sources (8), the external unit being for example in the form of a keyboard, a tablet or a touch screen (13) or a mobile telephone, it being possible for this unit to be fixed or mobile, the wireless communication being limited to the volume of the room in which the item (1) is located.

14. Item (1) according to any of claims 1 to 13, **characterized in that** the interface (12) makes it possible to control or transmit commands to the heating elements and/or to the light sources by contact or movement and/or enables downloading and/or transmission of data such as Internet pages, backgrounds or recipes, these data being transmitted to light sources (8) for the display of said data on the surface of the worktop (5).

15. Item (1) according to any of claims 1 to 14, **characterized in that** the item (1) comprises one or more interfaces (12), of the same type or different, making it possible to coordinate the activation of the heating elements (7) with the activation of the light sources (8).

16. Item (1) according to any of claims 1 to 15, **characterized in that** the worktop (5) comprises one or more functional and/or decorative coatings based on enamel or on paint or on thin film(s).

17. Item (1) according to any of claims 1 to 16, **characterized in that** the worktop (5) is mounted horizontally on at least one or more supporting elements, such as a cabinet (4) of a piece of furniture (2) or one or more supporting legs, thus forming, together with said supporting elements, a table, a solid or non-solid piece of furniture, or a counter.
